Europäisches Patentamt

European Patent Office

Office européen des brevets

(19)

(11) Veröffentlichungsnummer: **0 125 474**

**A1**

(12) # EUROPÄISCHE PATENTANMELDUNG

(21) Anmeldenummer: 84103827.6

(22) Anmeldetag: 06.04.84

(51) Int. Cl.³: **B 03 C 1/00**
B 03 C 1/16, B 03 C 1/14
E 02 B 15/04

(30) Priorität: 18.04.83 DE 3313997

(43) Veröffentlichungstag der Anmeldung:
21.11.84 Patentblatt 84/47

(84) Benannte Vertragsstaaten:
BE FR GB IT NL SE

(71) Anmelder: Kupczik, Günter, Dipl.-Ing.
Wittenbergener Weg 18
D-2000 Hamburg 56(DE)

(71) Anmelder: Stange, Gerd, Prof. Dr.-Ing.
Kronkamp 39
D-2353 Nortorf(DE)

(72) Erfinder: Kupczik, Günter, Dipl.-Ing.
Wittenbergener Weg 18
D-2000 Hamburg 56(DE)

(72) Erfinder: Stange, Gerd, Prof. Dr.-Ing.
Kronkamp 39
D-2353 Nortorf(DE)

(74) Vertreter: Kretzschmar, Otto Robert, Dipl.-Ing.
Beim Strohhause 34
D-2000 Hamburg 1(DE)

(54) **Fördervorrichtung zum Entfernen von Erdöl und Erdölfraktionen aus Wasser.**

(57) Eine umlaufende und teilweise in das Wasser eintauchende Fördervorrichtung zum Entfernen von Erdöl und Erdölfraktionen aus Wasser unter Verwendung eines pulverigen Gemisches aus saugfähigem Bindemittel und magnetisierbarem Material geringeren mittleren spezifischen Gewichtes als Wasser besitzt wenigstens eine Magnetanordnung (13), die wenigstens unter dem aufsteigenden Abschnitt der Fördervorrichtung (2, 8) ein sich über die Fläche weinigstens dieses Abschnittes erstreckendes, weitgehend unhomogenes Feld, bestimmt durch ein möglichst großes Produkt B x gradB (B = Flußdichte), bildet, wobei die Gradientenrichtung im Wirkungsbereich des Abtransportes senkrecht zur Oberfläche der umlaufenden Fördervorrichtung (2, 8) gerichtet ist. Diese Magnetanordnung ist mit benachbarten langgestreckten Polen ausgeführt, die über die Fläche des wenigstens aufsteigenden Abschnittes verteilt sind. Benachbarte Pole haben alternierende Polaritäten.

Fig.1

EP 0 125 474 A1

## Fördervorrichtung zum Entfernen von Erdöl und Erdölfraktionen aus Wasser

Die Erfindung betrifft eine Fördervorrichtung zum Entfernen von Erdöl und Erdölfraktionen aus Wasser.

Hierbei handelt es sich um eine umlaufende und teilweise in das Wasser eintauchende Fördervorrichtung unter Verwendung eines pulverigen Gemisches aus saugfähigem Bindemittel und magnetisierbarem Material geringeren mittleren spezifischen Gewichtes als Wasser und unter Verwendung von Magneten in einer Magnetanordnung wenigstens unter dem aufsteigenden Abschnitt der Fördervorrichtung.

Eine solche Fördervorrichtung ist vorgeschlagen in Patent bzw. Patentanmeldung P 31 46 847.0-43. Dabei besteht in der speziellen Ausführung die Fördervorrichtung aus einem umlaufenden unter die Wasseroberfläche tauchenden
Förderband, dessen stumpfwinklig aus der Wasseroberfläche
aufsteigenden Trum eine Magnetanordnung zugeordnet ist.
Erwähnt ist in diesem Zusammenhang wenigstens ein fremderregbarer Stabmagnet mit Achsrichtung parallel zur Fördervorrichtung, auch unter Einsatz mehrerer solcher Magnetanordnungen hinter- oder nebeneinander, insbesondere
auch in kammartiger Ausführung. Einbezogen werden dabei
magnetische Wechselfelder oder magnetisch schwankende Felder in verschiedener Ausbildung über die Länge der Transportstrecke, wobei ferner für die Magnetanordnung auch
fremderregte Magnete vorgesehen sind.

Eine oben erwähnte Fördervorrichtung, die teilweise in das
Wasser eintaucht, umfaßt auch eine andere Ausführung als
Transportband, beispielsweise einen umlaufenden Zylinder.

Es ist dabei vorgeschlagen worden, in das Erdöl bzw. die
Erdölfraktionen saugfähige Bindemittel und magnetisierbares
Material, das das Bindemittel durchsetzt, einzubringen. Dabei kann als saugfähiges Bindemittel ein natürliches Material, insbesondere faseriger Struktur, verwendet werden und
eine bestimmte Vermischung zwischen Bindemittel und magnetisierbarem Material vorgesehen sein, um optimale Ergebnisse zu erzielen. Ferner ist als Bindemittel bzw. als
saugfähiges Material Torfmull vorgeschlagen, wobei im Hinblick auf das Volumenverhältnis ein aufgelockerter Zustand
vorgesehen ist. Dabei ergeben sich zusätzlich  Vorteile
bei faseriger Struktur des Bindemittels als Gitter für die
Partikel aus magnetisierbarem Material, insbesondere unrunde Eisenfeilspäne.

An sich ist die Verwendung von Transportbändern zur Abführung von auf Wasser treibenden Ölen, Fettschichten und

ähnlichen Verunreinigungen auch aus der DE-AS 12 25 117 bekannt. Gemäß dieser ist das Förderband so geneigt angeordnet und derart angetrieben, daß das Untertrum des Förderbandes in die Schmutzschicht von oben her kommend eintaucht und die Zugrichtung des Untertrums bei der Reinigung eines fließenden Gewässers dessen Fließrichtung gleichgerichtet ist. Bei der Reinigung eines stehenden Gewässers mittels eines auf einem schwimmfähigen Fahrzeug angeordneten Förderbandes wird das Fahrzeug derart voranbewegt, daß das in die Schmutzschicht von oben her eintauchende Untertrum des Förderbandes, bezogen auf die Bewegungsrichtung des Fahrzeuges, in der Bewegungsrichtung zuvorderst zu liegen kommt.

Bei dieser bekannten Ausführung, die hinsichtlich der Ausgestaltung und Anordnung des Transportbandes mit ihren Merkmalen, einschließlich der Umlenkwalzen, einbezogen wird, auch hinsichtlich der Eintauchtiefe der unteren Umlenkwalze, sind aber auch zur Abführung des Erdöls bzw. der Verunreinigungen nur die Transportwirkungen des Förderbandes einbezogen, das allenfalls aus für Öl adhäsivem Werkstoff, vornehmlich aus Kunststoff, bestehen kann, und zur Abführung sind Abstreifkämme angeordnet. Diese bekannte Ausführung arbeitet nicht effektiv, einerseits weil lediglich eine Art der Abschaufelung vorgenommen wird und andererseits insbesondere Erdöl oder Fettschichten auf dem Förderband bzw. der Förderbandeinrichtung gleiten können, so daß der erhoffte Zweck nur unzureichend erfüllt wird.

Wenn bereits gemäß dem oben erwähnten Vorschlag eine Magnetanordnung vorgesehen sein soll, dann hängt aber die Wirkung von der speziellen Ausführung einer solchen Magnetanordnung ab. Dabei ist zu berücksichtigen, daß Magnetanordnungen auch hinsichtlich der aufgenommenen Verunreinigungsschicht mit magnetisierbaren Partikeln hemmende Wirkungen ausüben können, die eben nicht zu einer optimalen Abführung beitragen.

Der Erfindung liegt daher die Aufgabe zugrunde, eine Fördervorrichtung der eingangs angegebenen Art, bzw. gemäß Oberbegriff des Patentanspruches 1, so auszugestalten, daß die Abführung von Erdöl und Erdölfraktionen bzw. auch anderer Verunreinigungen, die mit magnetisierbarem Material durchsetzt sind, erheblich verbessert wird, wobei auch die Anziehungskraft eines Magnetfeldes zur Sammlung der Verunreinigung an der Fördervorrichtung beiträgt.

Diese Aufgabe wird erfindungsgemäß dadurch gelöst, daß wenigstens eine Magnetanordnung mit mehreren Magnetpolen vorgesehen ist, die wenigstens unter dem aufsteigenden Abschnitt der Fördervorrichtung ein sich über die Fläche wenigstens dieses Abschnittes erstreckendes, weitgehend unhomogenes Feld, bestimmt durch ein möglichst großes Produkt $B \times grad B$ ($B$ = Flußdichte) bildet, wobei die Gradientenrichtung im Wirkungsbereich des Abtransportes senkrecht zur Oberfläche der umlaufenden Fördervorrichtung gerichtet ist.

Durch eine solche Feldausbildung wird eine verbesserte Führung des mit magnetisierbarem Material versehenen Erdöls bzw. der Erdölfraktionen oder anderer Verunreinigungen erreicht, und zwar dadurch, daß die Haftung an der umlaufenden Fördervorrichtung zum Heraustransport verbessert wird. Eine Modulation des Magnetfeldes soll dadurch weitgehend vermieden bzw. geglättet werden. Die starke Unhomogenität des Feldes in der angegebenen Weise führt zu einer verbesserten Mitnahme.

Bevorzugt wird dabei, daß die Magnetanordnung mit benachbarten langgestreckten Polen ausgeführt ist, die über die Fläche des wenigstens aufsteigenden Abschnittes in einer Richtung und die Breite der Fördervorrichtung in der anderen Richtung verteilt angeordnet sind, und daß benachbarte Pole alternierende Polaritäten aufweisen. Hierdurch wird ein flächiges Magnetfeld geschaffen, das mit der umlaufenden Transportvorrichtung besonders günstig zusammenarbeitet. Zweckmäßig sind dabei benachbarte langgestreckte Pole quer zur Transportrichtung nebeneinander angeordnet. Durch die oben angegebenen Bedingungen des unhomogenen Magnetfeldes ergeben sich günstige Einflüsse auf die Mitnahme der Verunreinigungen. Besonders bevorzugt wird dabei aber, daß benachbarte langgestreckte Pole parallel zur Transportrichtung angeordnet sind. Damit wird eine gleichbleibende und im übrigen günstig im Bereich des Transportbandes wirkende Kraft erzeugt, welche den Abtransport der Verunreinigungen günstig beeinflußt. Einbezogen wird dabei in der besonders bevorzugten Ausführungsform, daß senkrecht zur Ebene der Transportvorrichtung gerichtete Polstücke als Magnetkern angeordnet sind.

In einer besonders vorteilhaften Ausführungsform ist die Quererstreckung der langgestreckten als Magnetkern vorgesehenen Polstücke im wesentlichen gleich, vorzugsweise kleiner als die Nutbreite. Durch eine solche Aufteilung zwischen Nutbreite und Polstückbreite wird die Bedingung eines weitgehend unhomogenen Feldes auch im Zusammenhang mit dem erwähnten Produkt in besonders günstiger Weise erreicht. Besonders bevorzugt wird dabei eine kleinere Polstückbreite als die Nutbreite, beispielsweise in der Größenordnung von nur 50 % der Nutbreite.

Für eine fremderregte Magnetanordnung, die für die vorhergehende Ausführung einbezogen wird, die jedoch auch eine Ausbildung mit Permanentmagneten nicht ausschließt, liegt
eine bevorzugte Ausführungsform in einer mäanderartigen
hin- und hergehenden Magnetwicklung zwischen den Polstükken. Dieses hat einerseits Vorteile in der einfachen Ausbildung, auch im Anschluß an eine Stromzuführung und weiterhin in der Möglichkeit einer Aufteilung zwischen starren
Wicklungsstäben und flexiblen Verbindungen zwischen diesen
Wicklungsstäben.

Einbezogen wird jedoch zweckmäßig, daß die Polstücke von
Ringwicklungen umgeben sind, die vorzugsweise gegensinnig
in Reihe geschaltet sind. Dabei wird aber auch eine abschnittsweise Erregung erleichtert, d.h. eine selektive
Erregung einzelner Wicklungen oder Wicklungsgruppen in
Abhängigkeit auch von ihrer Anordnung in bezug zur umlaufenden Fördervorrichtung.

Wenn an sich im ganzen eine umlaufende Fördervorrichtung
genannt ist, dann ist im Rahmen der Erfindung vorteilhaft
eine der Einrichtungen vorgesehen, welche umfassen entweder ein Förderband, das sich schräg in eine Wasseroberfläche erstreckt und mit dem oberen Trum aus der Wasseroberfläche herauslaufend ausgeführt ist, und das sich um
zwei Umlenkwalzen bewegt, von denen wenigstens eine als
Antriebswalze mit einem Antriebsmotor ausgeführt ist, oder
einen Zylinder; dabei ist in dem Inneren der Fördervorrichtung die Magnetanordnung vorgesehen, wobei die Magnetpole dem Verlauf der Fördervorrichtung angepaßt vorgesehen
sind. Diese Ausführung ist auch mit Permanentmagneten vorgesehen. Bei Anordnung einer Magnetwicklung für die Erregung der Polstücke kommt der Wicklungsauslegung besondere
Bedeutung zu. Einbezogen wird dabei unter obigen Bedingungen zweckmäßig eine starre Magnetanordnung unter dem aufsteigenden Abschnitt der Fördervorrichtung, beginnend in
einem Bereich unter Wasser und endend in einem Bereich des
oberen Umlenkpunktes der Fördervorrichtung.

Besonders bevorzugt wird aber in einer speziellen Ausführung, daß die Magnetanordnung umlaufend in die Fördervorrichtung eingeschlossen ist. Im ersteren Falle ist die Erregung durch einen einfachen Anschluß herstellbar. Im zweiten Falle der mit umlaufenden Magnetanordnung wird bevorzugt, daß eine Erregung für die Magnetwicklung vorgesehen
ist, welche den aufsteigenden Abschnitt der Fördervorrichtung und vorzugsweise auch den eintauchenden Abschnitt der
umlaufenden Fördervorrichtung an der Eintauchseite umfaßt,
und daß die Erregung im Bereich, vorzugsweise kurz nach
dem Bereich, der oberen Umlenkung unterbrochen ist. Hierbei
wird die Abführung des mitgenommenen Erdöls oder der Erdölfraktionen verbessert.

Unter der selektiven Erregung ist die gesamte Magnetwicklung vorteilhaft gruppenweise unterteilt und an Erregungszuleitungen angeschlossen. Einbezogen werden dabei umlaufende bandförmige Stromzuführungen.

In einer vorteilhaften Ausführungsform sind dabei umlaufende bandförmige Stromzuführungen Wicklungsgruppen zugeordnet
und mit Anschlüssen versehen, die im oberen Bereich unterbrochen sind, wobei diese Anschlüsse Unterbrechungsschalter aufweisen. Für die Unterbrechungsschalter können mechanische Anschlagmittel vorgesehen sein, um sie in einem bestimmten Umlaufbereich zu öffnen.

Bei Anordnung von Stromzuführungsschienen sind vorteilhaft
bürstenartige Kontaktanordnungen für Gruppen von Magnetwicklungen eingesetzt. Auch dabei liegt eine zweckmäßige Ausgestaltung darin, daß die bürstenartigen Kontaktanordnungen
abschaltbar ausgeführt sind und über einen Bereich des Umlaufs, beginnend im oberen Umlenkpunkt, von den Stromzuführungen trennbar sind. Hierdurch ist die optimale Einsetzung der Magnetkraft möglich.

Bei Einschluß einer mit der Fördervorrichtung umlaufenden
Magnetanordnung in diese Fördervorrichtung sind vorzugsweise ein innerer Antriebsträger und eine äußere Transportfläche vorgesehen, zwischen welchen die Polstücke und Wicklungen angeordnet sind. Dabei ergeben sich zwar Abstände
aufgrund der radialen Stärke der Fördervorrichtung bzw.
ihrer Erstreckung senkrecht zur Förderrichtung, aber dieser
Umstand ist in Verbindung insbesondere mit einem Transportband dadurch vorteilhaft, daß das Transportband die äußere
Transportfläche bildet und im geradlinigen Abschnitt des
Transportbandes durchhängend geführt und im Bereich der
Umlenkung um Umlenkwalzen straff geführt ist. Hierdurch
bildet das Transportband auf einer geradlinigen Transportstrecke praktisch muldenartige Vertiefungen, die die Mitnahme der Verunreinigungen verbessern, wobei der Abwurf
bei Straffung unter Beseitigung der Vertiefung in der oberen Umlenkung erleichtert wird. In dieser Ausführung sind
zweckmäßig bei einer mäanderartigen Wicklung feste Stäbe
eingelegt und flexible Verbindungen vorgesehen.

Es versteht sich, daß auch bei einer zylindrischen Fördervorrichtung ein entsprechender Einbau in einen Umlauf vorgesehen ist, wobei sich aber im gesamten Umlaufbereich
keine räumlichen Änderungen ergeben.

Auch in Längsrichtung angeordnete Magnetpole sind in die
Fördervorrichtung einzubeziehen. Dabei sind vorteilhaft
sich in Längsrichtung erstreckende Magnetpole klotzartig unterteilt und innen eng benachbart auf dem inneren Antriebsträger angeordnet, und die Wicklungen sind insbesondere an Kopfstücken der gruppenweise unterteilten Magnetpole mit Spiel zu diesen angeordnet.

In diesem Zusammenhang führt bei der Umlenkung an einem
um zwei Umlenkwalzen geführten Transportband die äußere
Aufspaltung der Magnetpole zu einem Einfluß durch das Magnetfeld, das im oberen Bereich den Abwurf fördert.

Wenn oben wenigstens eine Magnetanordnung angeführt ist,
dann liegt in diesem Zusammenhang eine vorteilhafte Ausführung darin, daß am eintauchenden Ende der Fördervorrichtung
eine weitere Magnetanordnung vorgesehen ist, die entgegen
der Transportrichtung der auftauchenden Fördervorrichtung
in das Wasser tauchend angeordnet ist und der-en Magnetfeld
vor der Fördervorrichtung als Sammler des Gemisches mit
magnetisierbarem Material vorgesehen ist. Dadurch soll das
mit magnetisierbarem Material versehene Gemisch in einem
erweiterten Bereich vor der Fördervorrichtung zusammengezogen und zur Entnahme schon verdichtet werden. Das steigert die Leistungsfähigkeit.

In einer vorteilhaften Ausführungsform besteht die weitere
Magnetanordnung aus einem Solenoid mit insbesondere sich
mit zunehmendem Abstand vor der Fördervorrichtung trichterförmig erweiternden Windungen. Hierdurch wird praktisch
ein Sammeltrichter geschaffen. Unter diesem Gesichtspunkt
sieht eine zweckmäßige Ausführung auch vor, daß für die
weitere Magnetanordnung ein flachgedrückter Konus aus magnetisierbarem Material vorgesehen ist, der eine zusätzliche
Magnetwicklung trägt und dessen weitere Mündung von der Fördervorrichtung abgekehrt ist, welche bei bandförmiger
Ausführung an der engeren Mündung angeordnet ist, und daß
die längere Querschnitts-Achse des flachgedrückten Konus
parallel zur Wasseroberfläche verläuft. Durch diesen flachgedrückten Konus ergibt sich dabei zugleich auch ein mechanischer Einfluß für die Zusammenführung des Materials,
wobei auch die engere Mündung so in bezug zur Fördervorrichtung ausgeführt ist, daß mitgenommenes Wasser abfließen
kann. Einbezogen wird, daß ein Förderband zweckmäßig in
die engere Mündung eingreift.

Gemäß einer anderen vorteilhaften Ausführung ist am eintauchenden Ende der Fördervorrichtung eine zusätzliche
Magnetanordnung mit einer über die Fördervorrichtung hinausgehenden und im Wasser angeordneten schnabelartigen
Polanordnung vorgesehen. Hierdurch wird praktisch eine
Magnetschaufel aus den Feldlinien zwischen den schnabelartigen Polanordnungen geschaffen.

Gemäß einer weiteren vorteilhaften Ausgestaltung ist noch
eine zusätzliche Magnetwicklung um das Förderband herumgelegt und so erregt, daß die erzeugten Kraftlinien an der
Oberseite des Förderbandes parallel zur Transportrichtung
desselben verlaufen. Dadurch soll die Wirkung des Förderbandes unterstützt werden.

Besonders vorteilhafte Merkmale ergeben sich aus der Anspruchsfassung.

Die Erfindung wird im folgenden anhand von Ausführungsbeispielen erläutert, die in der Zeichnung dargestellt sind.
In der Zeichnung zeigen:

- 11 -

0125474

Fig. 1 : eine schematische Seitenansicht einer
Ausführungsform,

Fig. 2 : eine schematische Seitenansicht einer
anderen Ausführungsform,

Fig. 3 : eine Teildarstellung in Seitenansicht
einer besonderen Ausführungsform der
Magnetanordnung und Fördervorrichtung,

Fig. 4 : in Teildarstellung eine schematisierte
Draufsicht auf eine Magnetanordnung
auch in der Anwendung nach Fig. 3,

Fig. 5 : eine schematisierte Teildarstellung in
Draufsicht auf eine Magnetanordnung in
einer weiteren Ausführungsform,

Fig. 6 : eine der Fig. 5 entsprechende Ansicht
mit anderen Anschlüssen für Wicklungseinheiten der Polstücke,

Fig. 7 : eine der Fig. 4 entsprechende Ansicht
der Magnetanordnung in gruppenweiser
Unterteilung mit verschiedenen Erregungszuführungen für die einzelnen
Gruppen,

Fig. 8 : eine Draufsicht auf eine Magnetanordnung in einer speziellen Ausrichtung
der Fördervorrichtung,

Fig. 9    :    eine Seitenteilansicht zur Erläuterung
                einer Magnetanordnung in einem Transportband entsprechend Fig. 3, jedoch in der
                Polstückanordnung nach Fig. 8,

Fig. 10   :    schematische Kennliniendarstellungen für
                das Verhältnis zwischen Nutbreite und
                Polstückbreite mit aufgezeichneten Kennlinien in zwei Ausführungen,

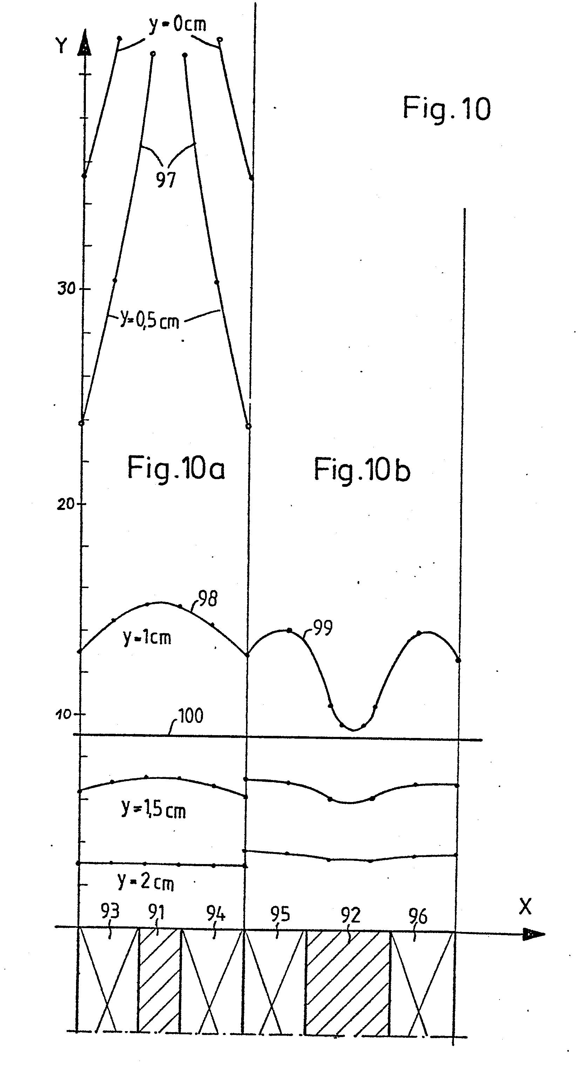

Fig. 10 a:     mit kleinerer Polstückbreite als Nutbreite,

Fig. 10 b:     mit etwas größerer Polstückbreite als Nutbreite,

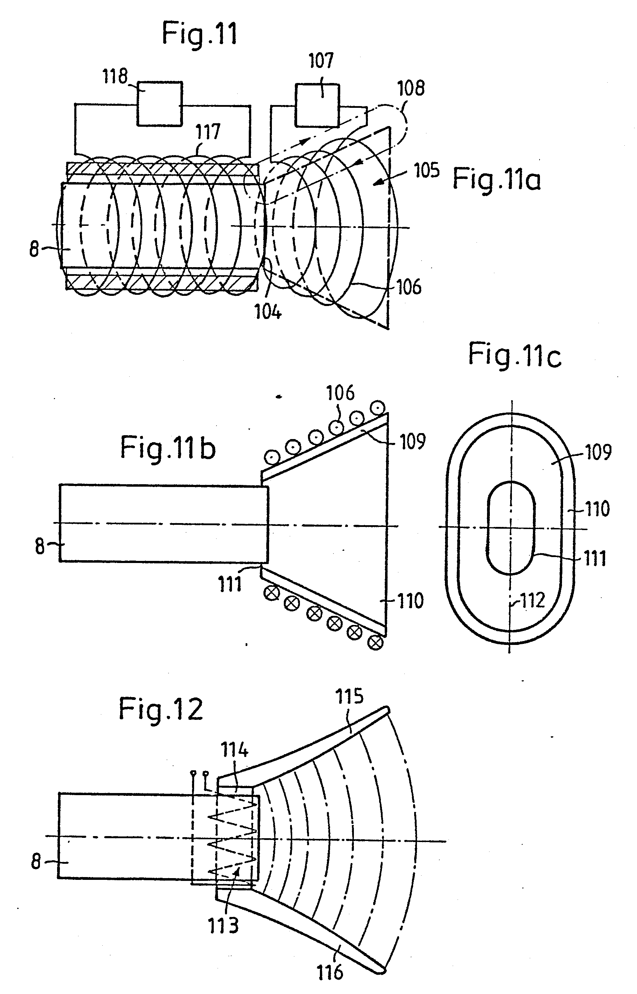

Fig.  11a:     eine schematische Darstellung einer zu-
                sätzlichen Ausgestaltung der Fördervor-
                richtung als Transportband zur Verbesse-
                rung des Wirkungsgrades,

Fig. 11 b:     eine der Fig. 11 a entsprechende Darstellung einer anderen Ausführungsform,

Fig. 11 c:     eine Ansicht von Fig. 11 b von rechts,

Fig. 12   :    eine Ansicht eines Förderbandes von oben
                mit einer zusätzlichen Magnetanordnung
                in einer weiteren Ausführungsform.

In allen Figuren werden gleiche Teile mit gleichen Bezugszeichen bezeichnet.

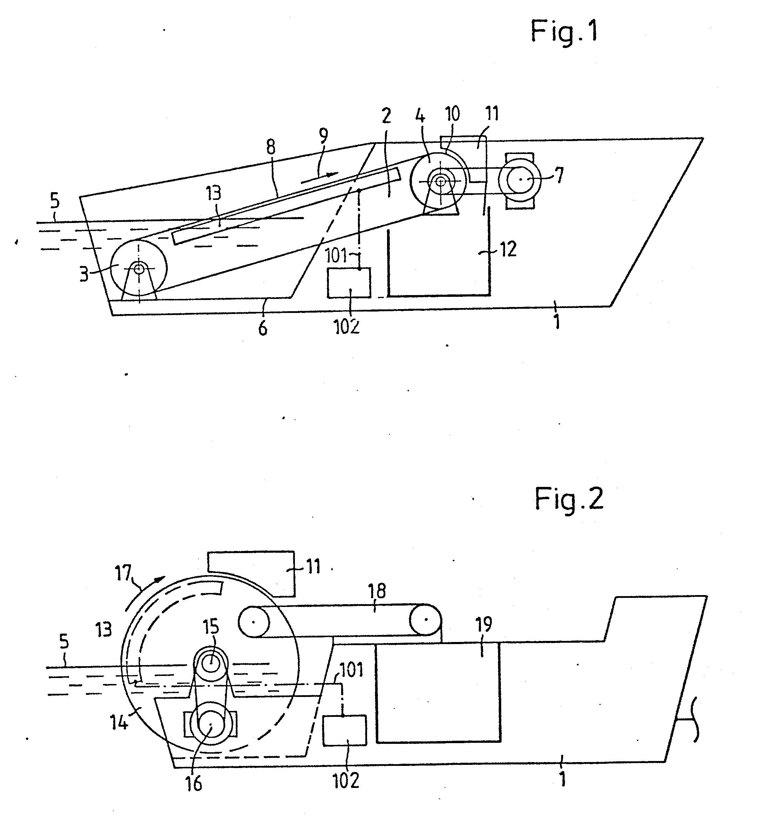

Nach Fig. 1 ist auf einem Schwimmkörper 1, insbesondere einem Schiff, eine Transportvorrichtung 2 als umlaufendes Transportband gezeigt, das über zwei Umlenkrollen 3, 4 geführt ist, die auf dem als Träger dienenden Schiff 1 gelagert sind. Das Schiff hat beispielsweise bugseitig eine unter die Wasseroberfläche 5 herunterreichende Ausnehmung 6, so daß die Transportvorrichtung 2 mit ihrem niedrigeren Ende im Bereich der Umlenkrolle 3 unter der Wasseroberfläche 5 liegt.

Es versteht sich, daß ein Träger 1, gegebenenfalls ein Schiff, auch so ausgeführt sein kann, daß die Umlenkrolle 3 an seitlichen Verstrebungen oder Trageinrichtungen außerhalb des Schiffskörpers gehalten ist, wie es aus den zum Stand der Technik hervorgehenden Ausführungen bekannt ist.

An der Umlenkrolle 4 ist ein Antriebsmotor 7 angeordnet, der das Transportband 8 in Richtung des Pfeiles 9 so antreibt, daß der oben liegende Abschnitt aus der Wasseroberfläche 5 herausführend bewegt wird. Im Bereich des oberen Umlenkpunktes bei 10 im Bereich der Umlenkrolle 4 können Hilfseinrichtungen 11, wie Abstreifer, angeordnet sein, damit mitgenommenes Material, d.h. Verunreinigungen oder Öl, in einen Tank 12 des Trägers 1 abgeworfen wird.

Maßgeblich ist dabei eine Magnetanordnung 13 unter dem aufsteigenden Trum des Transportbandes, wobei die Magnetanordnung eine Ausführung hat, die noch beschrieben wird. Maßgeblich ist im Zusammenhang mit der gezeigten Ausführungsform, daß auch die Magnetanordnung 13 unter den Wasserspiegel 5 taucht. Der Magnetanordnung 13 ist eine nur formal dargestellte, aber durch eine Verbindung 101 angeschlossene Erregerspannungsquelle 102 zugeordnet. Die Art des Anschlusses einzelner Erregerwicklungen wird später beschrieben.

Die Fig. 2 zeigt auf einem Träger 1, insbesondere einem Schiff, eine andere Fördervorrichtung als in Fig. 1, und zwar einen umlaufenden Zylinder 14, der um eine Achse 15 verdrehbar gelagert ist, an welcher ein Antriebsmotor 16 antreibt. Auch hier ist die Anordnung so vorgesehen, daß die Fördervorrichtung, insbesondere der Zylinder 14, unter die Wasseroberfläche eintaucht, und zwar in einem Maße, daß zweckmäßig die Achse 15 im wesentlichen in Höhe der Wasseroberfläche liegt. Bei einer Umlaufrichtung entsprechend dem Pfeil 17 ist wenigstens unterhalb des aufsteigenden Quadranten eine Magnetanordnung 13 vorgesehen. Auf dem Träger ist eine Hilfseinrichtung 11 angeordnet, die das auch durch Magnetkräfte mitgenommene Material löst und nach unten beispielsweise auf ein angetriebenes Transportband 18 abwirft, das es zu einem Aufnahmebehälter 19 im Träger 1 führt.

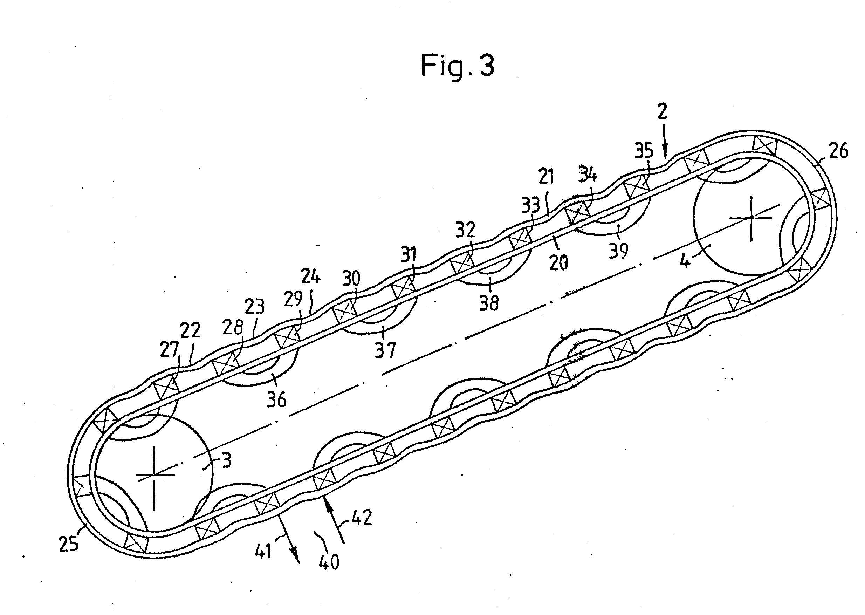

In Fig. 1 ist als Transportvorrichtung 2 ein umlaufendes Transportband gezeigt, das als solches auch in Fig. 3 dargestellt ist. Dabei sind auch die Umlenkrollen 3, 4 gezeigt. Das Transportband der im ganzen mit 2 bezeichneten Transportvorrichtung besitzt einen inneren Antriebsträger 20, der direkt um die Umlenkrollen 3, 4 geführt ist und gegebenenfalls auch durch Zahneingriffe mitgenommen wird. Außerdem besitzt die Transportvorrichtung eine äußere Transportfläche 21, die auch bandartig ausgeführt ist. Diese äußere Transportfläche 21 kann in Form eines gewellten Bandes ausgebildet sein, das sich im Bereich der Umlenkrollen 3, 4 streckt und zwischen diesen zusammenzieht. In der bevorzugten Ausführungsform handelt es sich aber auch bei 21 um ein flächiges und flexibles Transportband, das im geradlinigen Abschnitt zwischen den Umlenkrollen 3, 4 durchhängt und in diesem Bereich Mulden 22, 23, 24 ... bildet, aber im Bereich der Umlenkung beispielsweise unten bei 25 und insbesondere oben bei 26 durch Ausdehnung gestreckt werden, so daß oben der Abwurf erleichtert wird. Die Mulden 22 - 24 sind aber vorteilhaft für eine Art einer Aufschaufelung des abzuführenden Materials.

Wie aus Fig. 3 ersichtlich ist, sind zwischen dem inneren Antriebsträger 20 und der äußeren Transportfläche 21, in welcher Ausführung auch immer, Stäbe oder Teile 27 - 35 ... von Wicklungen angeordnet, die eine bestimmte Höhe aufweisen und damit die Abstützung der äußeren Transportfläche 21 bilden. Einbezogen werden auch dazwischen liegende Polstücke, die jedoch in der Fig. 3 nicht gezeigt sind. Die Fig. 3 zeigt vorzugsweise eine Ausführungsform, in welcher solche Polstücke niedriger als die Stäbe oder überhaupt ausgelassen sein können.

Aus Fig. 3 ist ein Beispiel insbesondere für eine mäanderartige Wicklung erkennbar, in welcher Verbindungen 36 - 39 .... schlaff ausgeführt sein können und jeweils außerhalb des Förderbandes verlaufen und zum Teil durchhängen und im Bereich der Umlenkung gestrafft sein können.

Nach Fig. 3 ergibt sich dabei eine Lösung mit Umlauf, in welcher beispielsweise bei 40 Zu- und Ableitungen 41, 42 für einen Erregerstrom angeordnet sein können, so daß jedenfalls schon vor dem unteren Umlenkungsbereich die Magnetkraft wirksam wird, die die Mitnahmekraft nach oben herstellt.

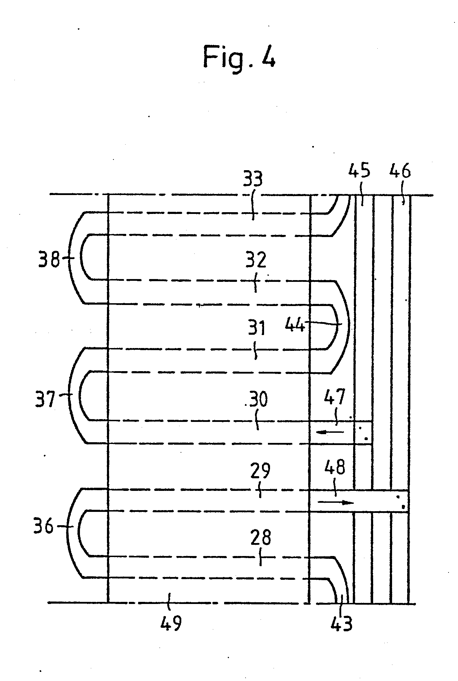

Unter der beschriebenen Ausführungsform nach Fig. 3 zeigt Fig. 4 einen Abschnitt der Magnetanordnung, in welcher beispielsweise Stäbe 28 - 33 gezeigt sind, die an verschiedenen Seiten der Magnetanordnung durch Verbindungen 36 - 38 bzw. 43, 44 verbunden sind, die im Gegensatz zu den Stäben flexibel ausgeführt sind. Fig. 4 zeigt einen Abschnitt mit einem Anschluß an eine Stromzuführung. Die Stromzuführung besteht nach Fig. 4 aus zwei stromleitenden und an eine Stromquelle angeschlossenen biegsamen, streifenförmigen Leitern 45, 46, von denen einer 45 durch den Anschluß 47 mit dem Stab 30 und ein anderer 46 durch den Anschluß 48 mit dem Stab 29 verbunden ist. Diese Ausführung ist natürlich auch für eine starre Ausbildung der Magnetanordnung nach den Fig. 1 und 2 zweckmäßig. Für eine umlaufende Anordnung ist die Ausbildung nach Fig. 4 auch geeignet, obgleich dabei eine Erregungsschaltung bevorzugt wird.

Bezüglich Fig. 4 wird bemerkt, daß das eigentliche Förderband mit 49 bezeichnet ist.

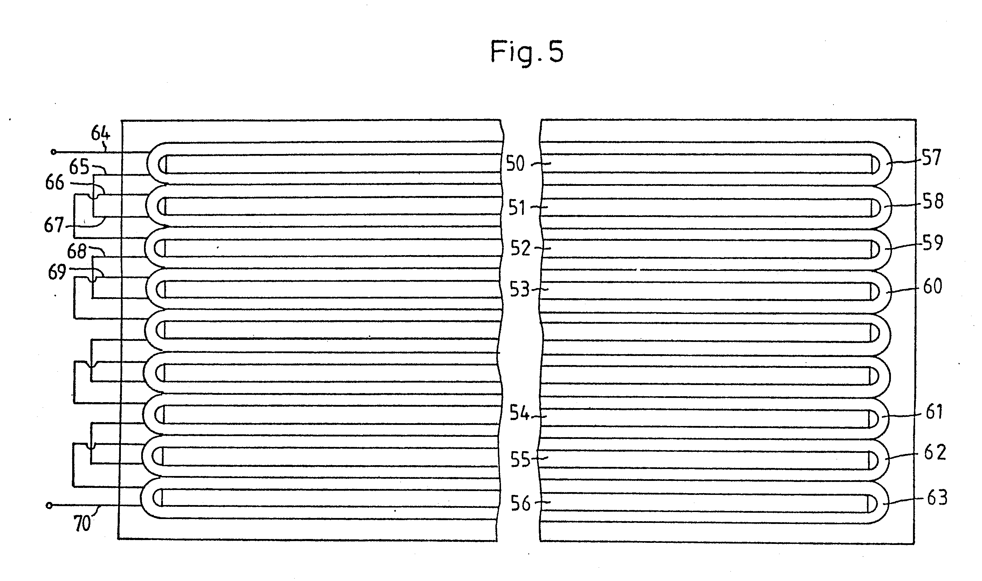

Fig. 5 zeigt auch im Hinblick auf die Magnetanordnung 13 nach den Fig. 1 und 2 eine Lösung, in welcher quer unter der Fördervorrichtung, sei sie band- oder trommelförmig ausgeführt, Polstücke 50 - 53 ... 54 - 56 angeordnet sind. Diese sich quer unter der Transportvorrichtung erstreckenden Polstücke sind in der Ausführung nach Fig. 5 von Ringwicklungen 57 - 60 ... 61 - 63 umgeben, die jeweils gesonderte Anschlüsse 64, 65 bzw. 66, 67 oder 68, 69, in der Gesamtgruppe durchgehend, letzten Endes in bezug zum Anschluß 64 bis zum Anschluß 70 haben.

Wenn die äußeren Anschlüsse 64 und 70 vorgesehen sind, zeigen die Zwischenanschlüsse 65 - 69 den Übergang zwischen den verschiedenen Wicklungen.

Die Ausführung nach Fig. 5 ist deshalb möglich, weil eine große Nutbreite in bezug zur Polstückbreite bevorzugt wird.

Hinsichtlich der Zusammenschaltung der ringförmigen Wicklungen ergibt sich aber auch leicht die Möglichkeit zu einer gruppenweisen Unterteilung, um den Betrieb der Fördervorrichtung zu optimieren.

Diese gruppenweise Unterteilung empfiehlt sich dann, wenn gemäß Fig. 3 die Magnetanordnung mit den Polstücken umlaufend angeordnet ist, d.h. beispielsweise zwischen einem Antriebsträger 20 und einer Transportfläche 21 vorgesehen ist. In diesem Falle empfiehlt es sich unter Bezugnahme auf Fig, 3, die Erregung während des Umlaufes um die obere Umlenkwalze 4 und in dem ersten nach unten gerichteten Abschnitt des unteren Transportbandtrums abzuschalten.

Gleiches gilt unter Bezugnahme auf die Fig. 2 bei einem Einbau der Magnetanordnung unterhalb des äußeren Magnetmantels des Zylinders 14. Anstelle der dort gezeigten Magnetanordnung 13 erstreckt sich diese dann um 360° im Inneren des Zylinders. Eine Abschaltung von der Erregung würde in dem Abschnitt in Umlaufrichtung hinter dem oberen Scheitel und in dem sich daran anschließenden Quadranten erfolgen.

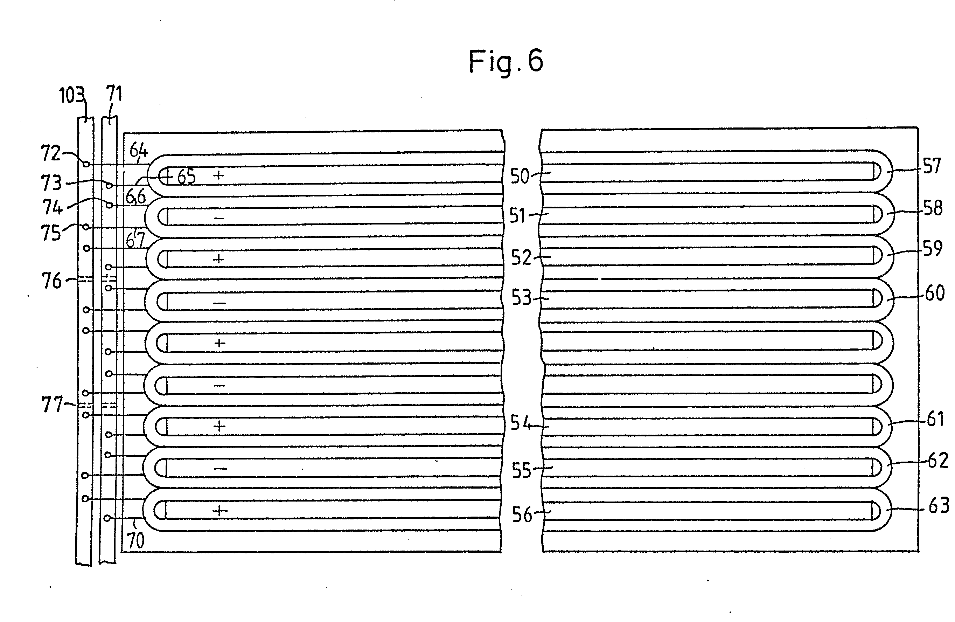

In Fig. 6 sind unter diesem Gesichtspunkt die Anschlüsse 64, 65, 66, 67, 68, 69 ... getrennt herausgeführt und jeweils mit streifenförmigen Leitern 103, 71 verbunden. Die jeweiligen Anschlußkontakte 72, 73, 74, 75... können abschaltbar ausgeführt sein, so daß ein wahlweiser Anschluß der Wicklungen bzw. von Wicklungsgruppen möglich ist. In diesem Zusammenhang wird einbezogen, die Wicklungsanordnung auch gruppenweise anzuschließen, indem beispielsweise die Leiter 103, 71 bei 76 und 77 unterbrochen sind. Damit ergibt sich die Möglichkeit einer gruppenweisen Erregung der Ringwicklungen 57 ... 63, indem die Bandabschnitte zwischen den
Unterbrechungen, beispielsweise 76, 77, wahlweise an eine
Stromzuführung angeschlossen sind. Für den Umlauf innerhalb des Wassers ist dabei eine abgedichtete Ausführung
vorgesehen, in welche auch die Anschlüsse 64 - 69 abgedichtet ausgeführt sind.

Der Anschluß an eine Erregungsquelle kann beispielsweise
dadurch erfolgen, daß die Abschnitte der streifenförmigen
Leiter 103,71 an Bürsten entlang laufen.

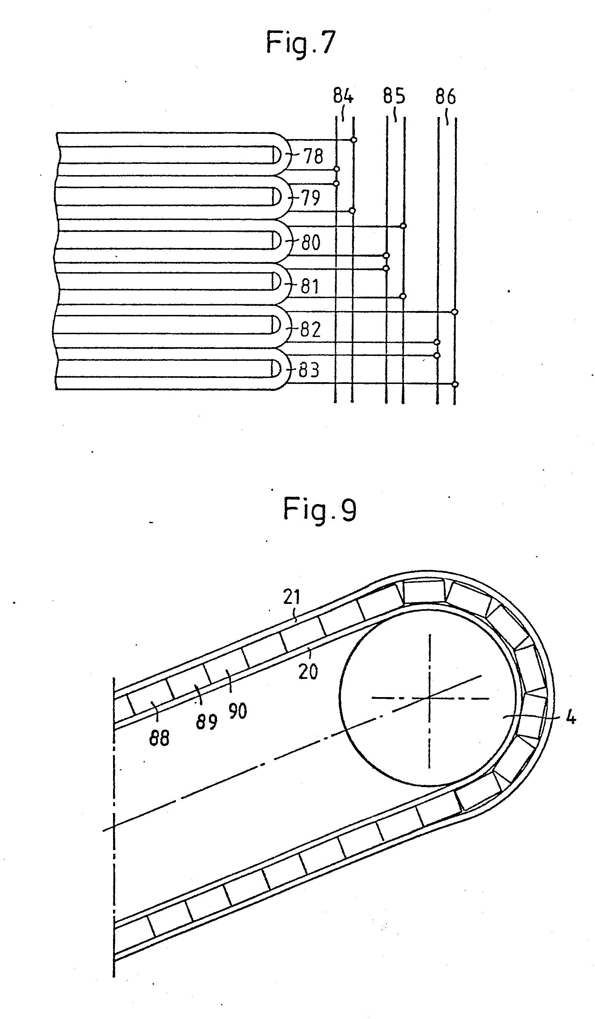

In Fig. 7 sind Abschnitte von Ringwicklungen 78, 79; 80,
81; 82, 83 gezeigt, die gruppenweise an mit-umlaufende
Leiterpaare 84, 85, 86 angeschlossen sind, so daß durch
die Zu- und Abschaltung eines oder mehrerer der Leiterpaare ausgewählte Ringwicklungsgruppen an die Erregung
anschließbar sind.

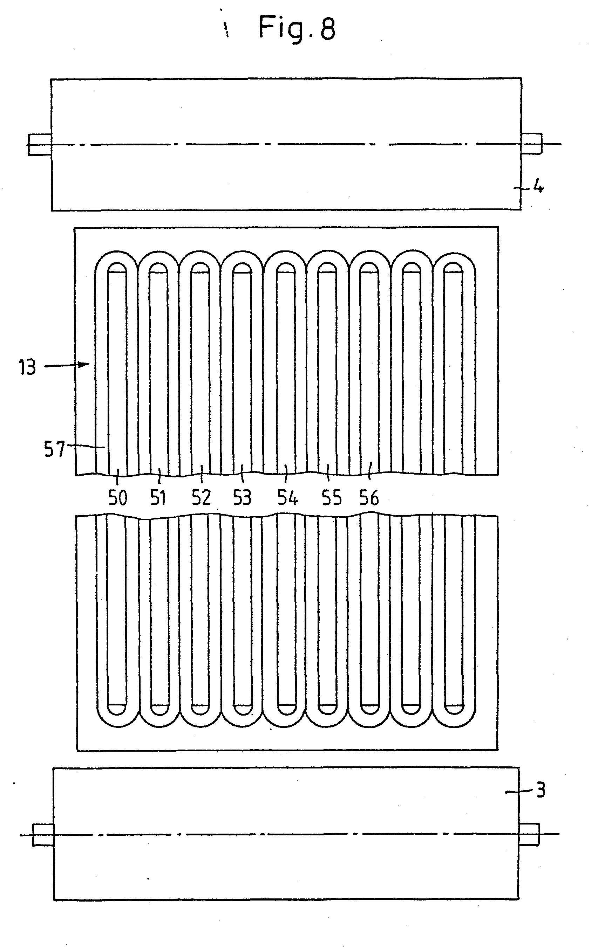

Fig. 8 zeigt unter Bezugnahme auf Fig. 1 eine Draufsicht
auf eine fest eingebaute Magnetanordnung 13 zwischen den
Umlenkwalzen 3, 4. Letztere sind in Fig. 8 lediglich schematisch eingezeichnet, um die Ausrichtung der Polstücke
50 - 56 parallel zur Bewegungsrichtung der Fördervorrichtung, insbesondere des Transportbandes 8, zu verdeutlichen.
Die Anschlüsse können dabei in einer Art vorgesehen sein,
wie sie anhand der Fig. 5 beschrieben worden ist. In diesem Falle entfällt die Notwendigkeit einer gruppenweisen
Erregung.

Derartige langgestreckte Magnetpole können nach Fig. 9 jedoch auch in eine Fördervorrichtung, beispielsweise ein
Transportband entsprechend Fig. 3, eingebaut werden. Fig. 9
zeigt lediglich die schematische Darstellung anhand eines umlaufenden Polstückes. Dieses Polstück ist klotzartig unterteilt, wobei die Klötze 88, 89, 90 ... im geradlinigen Abschnitt aneinander liegen, während sie im Bereich der Umlenkung, beispielsweise um die Umlenkwalze 4, mit ihrem inneren Ende eng benachbart am Transportträger 20 verbleiben, während sie nach außen hin radial abstehen und mit ihren äußeren Enden auseinanderklaffen. Auch in diesem Falle muß die äußere umkleidende Transportfläche 21 entsprechend dehnbar oder längenveränderlich ausgeführt sein. Entsprechend ist auch die Erregerwicklung flexibel ausgeführt und so auszulegen, daß sie im Bereich der Umlenkung die sich nach außen auseinanderspaltende Bewegung der einzelnen Klötze aufnehmen kann.

Bei einer solchen Ausführung empfiehlt sich im übrigen,eine Erregerwicklung, wie sie beispielsweise in Fig. 8 gezeigt und mit 57 bezeichnet ist, lediglich um einen Längenabschnitt des Polstückes zu legen und für andere entsprechende Längenabschnitte weitere Wicklungen vorzusehen. In diesem Bereich ist eine Überlappung beispielsweise an einem Klotz möglich, der eine Polschuhfläche, wie alle anderen Klötze, hat, unter dieser aber im Bereich seines Schaftes ausgenommen ist.

Die Fig. 10 a und 10 b zeigen zwei Kennlinienfelder. Längs der Abszisse X ist jeweils eine Gruppe aus einem Polstück 91, 92 und zweier benachbarter Nuten 93, 94 bzw. 95, 96 im Schnitt dargestellt. An der Ordinate ist die relative Magnetkraft $F_{mag}$ durch $G_{fe}$ aufgetragen, und zwar für gleiche Durchflutung der Nuten in beiden Kennlinienfeldern.

Es ist erkennbar, daß jeweils die Breite der Nuten 93 - 96 gleich ist, aber der dazwischen liegende Pol 91 in Fig. 10 a nur halb so breit ist wie in Fig. 10 b.

In beiden Kennlinienfeldern ist die relative Magnetkraft
in verschiedenen Abständen Y von der Magnetoberfläche aufgezeichnet. Erkennbar ist, daß in der Nähe bei Y = 0,5 cm
die relative Magnetkraft entsprechend den Kurvenzweigen 97
am größten ist. Beträchtliche Werte ergeben sich auch noch
bei Y = 1 cm entsprechend den Kurven 98, 99. In der Annahme,
daß für die Öl- oder Verunreinigungsabführung eine bestimmte
Magnetkraft herrschen muß, ist aus den beiden Kennlinienfeldern zu entnehmen, daß bei Y = 1 cm in Fig. 10 a noch
eine weitaus größere relative Magnetkraft herrscht als im
Bereich über dem Pol 92 in Fig. 10 b. Davon ausgehend, daß
eine solche Magnetkraft erforderlich ist, kann sich in diesen Darstellungen eine untere Grenze entsprechend der zur
Abszisse parallelen Linie 100 ergeben. Diese Grenze ist
hier jedoch nur beispielsweise zu verstehen. Sie wird in
der Praxis in Abhängigkeit von dem Gewichtsverhältnis im
aufzunehmenden Gemisch zwischen magnetisierbaren Partikeln
und saugfähigem Bindemittel, insbesondere Torf, gewählt.
Für das angegebene Beispiel in Fig. 10 wurde dabei ein sehr
geringes Verhältnis in der Größenordnung von $M_{Fe} : M_{Torf} =$
1 : 10 angenommen.

Ein Vergleich der Fig. 10 a und 10 b zeigt, daß die Magnetkraft günstiger ist, wenn der Pol 91 schmal ausgeführt ist,
und zwar immer bezogen auf eine gleiche konstante Durchflutung der Nuten.

Dabei ist zu berücksichtigen, daß die Kraft quadratisch
mit der Durchflutung zunimmt. Unter diesem Gesichtspunkt
ist die Fig. 10 zur Skalierung geeignet.

Die in ihr angegebenen Verhältnisse basieren darauf, daß
in Fig. 10 a die Polbreite 1 cm, die Nutbreite 1,5 cm und die Polstück- und Nutenhöhe 3,5 cm betragen, während in
Fig. 10 b bei gleicher Höhe und Nutbreite die Polbreite
2 cm beträgt. Hierin liegen vorteilhafte Ausführungen für
die Magnetanordnung. Bezüglich der Fig. 10 und der eingetragenen Werte ist eine konstante Durchflutung $\theta = N \cdot I =$
5000 A eingesetzt. Eine höhere Durchflutung, gerade mit
den angegebenen Größen der Magnetanordnung, wird einbezogen.

Die Fig. 11 und 12 zeigen eine Ausgestaltung mit einer
weiteren und auch zusätzlichen Magnetanordnung. In diesen
Figuren ist das Transportband 8 in Draufsicht gesehen erkennbar, dem an sich eine Magnetanordnung 13 zugeordnet ist.

Nach Fig. 11 a ist am unteren eintauchenden Ende 104 praktisch in Verlängerung des Transportbandes 8 als weitere
Magnetanordnung ein Solenoid 105 angeordnet, dessen Wicklung 106 auf nicht dargestellten Trägern, insbesondere
aus unmagnetischem Material, angeordnet ist. Die Wicklung
106 ist an eine Erregerquelle 107 angeschlossen, und zwar
derart, daß die Feldlinien 108 im Inneren zum Transportband
8 gerichtet sind.

Das Solenoid 105 bildet praktisch einen sich nach vorn erweiternden Sammler für das aufzunehmende Gemisch, wobei
das Solenoid mit seinem unteren Teil im Wasser liegt, während der obere Teil gerade über der Wasseroberfläche verlaufen kann.

In Fig. 11 b und c ist eine der Wicklung 106 entsprechende
Wicklung auf einem beispielsweise aus Eisen bestehenden
flachgedrückten Konus 109 angeordnet. Dieser Konus setzt das untere Ende des Transportbandes 8 gemäß obigen Angaben nach vorn, d.h. auch in Fahrtrichtung, bei der Aufnahme von Gemisch fort. Die weitere, d.h. größere Mündung 110 ist von dem Transportband 8 abgekehrt, das an der engeren Mündung 111 endet. Es besteht die Möglichkeit, das untere Ende des Transportbandes 8 auch etwas in die engere Mündung 111 einzuführen. Die längere Achse 112 des flachgedrückten Konus 109 liegt parallel zur Wasseroberfläche.

Nach Fig. 12 ist im Bereich des unteren Endes des Transportbandes 8 eine zusätzliche Magnetanordnung 113 angeordnet. Diese besteht aus einem über eine Wicklung fremderregbaren Magnetkörper 114 und sich schnabelförmig vor dem Transportband im Bereich der Wasseroberfläche oder etwas unter dieser erweiternden Polen 115, 116. Die zwischen diesen verlaufenden Feldlinien bilden, abgesehen von der mechanischen Zusammenführung des Gemisches, eine zusätzliche Zuführungshilfe zum Transportband bzw. einer anders ausgestalteten Fördervorrichtung. Auch die Wicklung von dem Magnetkörper 114 ist an eine Erregerstromquelle, wie 107 in Fig. 11, angeschlossen.

In allen diesen Ausführungen/ wie auch in der Ausführung nach Fig. 1 mit einem Förderband und den entsprechenden Ausgestaltungen mit der Magnetanordnung 13, wird einbezogen, daß eine zusätzliche Magnetanordnung 117 um das Förderband herum als entsprechende Wicklung, gegebenenfalls auch auf einem insbesondere rohrförmigen Kern angeordnet ist. Diese Wicklung ist an eine Erregerquelle 118 so angeschlossen, daß die auf der Oberseite des Förderbandes entlang-laufenden Feldlinien in Transportrichtung gerichtet sind und somit die Herausführung des Gemisches unterstützen.

– 1 –

Patentansprüche

1. Umlaufende und teilweise in das Wasser eintauchende
Fördervorrichtung zum Entfernen von Erdöl und Erdölfraktionen aus Wasser unter Verwendung eines pulverigen Gemisches aus saugfähigem Bindemittel und magnetisierbarem Material geringeren mittleren spezifischen Gewichtes als Wasser und unter Verwendung von
Magneten in einer Magnetanordnung wenigstens unter
dem aufsteigenden Abschnitt der Fördervorrichtung,
dadurch gekennzeichnet, daß wenigstens eine Magnetanordnung (13) mit mehreren Magnetpolen vorgesehen
ist, die wenigstens unter dem aufsteigenden Abschnitt
der Fördervorrichtung (2, 8, 14) ein sich über die
Fläche wenigstens dieses Abschnittes erstreckendes,
weitgehend unhomogenes Feld, bestimmt durch ein möglichst großes Produkt B x gradB (B = Flußdichte) bildet. wobei die Gradientenrichtung im Wirkungsbereich
des Abtransportes senkrecht zur Oberfläche der umlaufenden Fördervorrichtung (2, 8, 14) gerichtet ist.

2. Vorrichtung nach Anspruch 1, dadurch gekennzeichnet, daß die Magnetanordnung (13) mit benachbarten langgestreckten Polen (50 - 56, 91, 92) ausgeführt ist, die über die Fläche des wenigstens aufsteigenden Abschnittes in einer Richtung und die Breite der Fördervorrichtung in der anderen Richtung verteilt angeordnet sind, und daß benachbarte Pole (50 - 56, 91, 92) alternierende Polaritäten aufweisen.

3. Vorrichtung nach Anspruch 1 oder 2, dadurch gekennzeichnet, daß benachbarte langgestreckte Pole (50 - 56, 91, 92) quer zur Transportrichtung nebeneinander und senkrecht zur Ebene der Transportvorrichtung gerichtete Polstücke (50 - 56, 91, 92) als Magnetkern angeordnet sind.

4. Vorrichtung nach Anspruch 1 oder 2, dadurch gekennzeichnet, daß benachbarte langgestreckte Pole (50 - 56, 91, 92) parallel zur Transportrichtung und senkrecht zur Ebene der Transportvorrichtung gerichtete Polstücke (50 - 56, 91, 92) als Magnetkern angeordnet sind.

5. Vorrichtung nach Anspruch 3 oder 4, dadurch gekennzeichnet, daß die Quererstreckung der langgestreckten Polstücke (50 - 56, 91, 92) im wesentlichen gleich, vorzugsweise kleiner als die Breite der Nuten (93 - 96) ist.

6. Vorrichtung nach Anspruch 5, gekennzeichnet durch eine fremderregte Magnetanordnung mit als Magnetkern vorgesehenen Polstücken (50 - 56, 91, 92) und eine mäanderartige hin- und hergehende Magnetwicklung zwischen den Polstücken (Fig. 4).

7. Vorrichtung nach Anspruch 5, dadurch gekennzeichnet, daß eine fremderregte Magnetanordnung mit als Magnetkern vorgesehenen Polstücken (50 - 56) ausgeführt ist und die Polstücke (50 - 56) von Ringwicklungen (57 - 63) umgeben sind.

8. Vorrichtung nach einem der Ansprüche 1- 7, dadurch gekennzeichnet, daß als umlaufende Fördervorrichtung eine der Einrichtungen vorgesehen ist, welche umfassen entweder ein Förderband (8, 49), das sich schräg in eine Wasseroberfläche erstreckt und mit dem oberen Trum aus der Wasseroberfläche herauslaufend ausgeführt ist, und das sich um zwei Umlenkwalzen (3, 4) bewegt, von denen wenigstens eine als Antriebswalze mit einem Antriebsmotor (7) ausgeführt ist, oder einen Zylinder (14), und im Inneren der Fördervorrichtung eine starre Magnetanordnung (13) unter dem aufsteigenden Abschnitt der Fördervorrichtung (2, 14) angeordnet ist, beginnend in einem Bereich unter Wasser und endend in einem Bereich des oberen Umlenkpunktes der Fördervorrichtung, wobei die Magnetpole/dem Verlauf der Fördervorrichtung angepaßt vorgesehen sind.

9. Vorrichtung nach einem der Ansprüche 1 - 7, dadurch gekennzeichnet, daß als umlaufende Fördervorrichtung eine der Einrichtungen vorgesehen ist, welche umfassen entweder ein Förderband (8, 49), das sich schräg in eine Wasseroberfläche erstreckt und mit dem oberen Trum aus der Wasseroberfläche herauslaufend ausgeführt ist, und das sich um zwei Umlenkwalzen (3, 4) bewegt, von denen wenigstens eine als Antriebswalze mit einem Antriebsmotor (7) ausgeführt ist, oder einen Zylinder (14), und im Inneren der Fördervorrichtung eine Magnet-

0125474

anordnung (13) umlaufend in die Fördervorrichtung (2, 14) eingeschlossen ist (Fig. 3), wobei die Magnetpole dem Verlauf der Fördervorrichtung angepaßt vorgesehen sind.

10. Vorrichtung nach Anspruch 9, dadurch gekennzeichnet, daß bei Anordnung von Magnetwicklungen (27 - 33, 57 - 63; 78 - 83) eine Erregung vorgesehen ist, welche den aufsteigenden Abschnitt der Fördervorrichtung und vorzugsweise auch den eintauchenden Abschnitt der umlaufenden Fördervorrichtung an der Eintauchseite umfaßt, und daß die Erregung im Bereich, vorzugsweise kurz nach dem Bereich der oberen Umlenkung unterbrochen ist.

11. Vorrichtung nach Anspruch 10, dadurch gekennzeichnet, daß die Magnetwicklungen (57 - 63; 78 - 83) gruppenweise unterteilt und an Erregungsleiter (103, 71; 84 - 86) angeschlossen sind, die als umlaufende bandförmige Stromzuführungsleiter (103, 71; 84 - 86) Wicklungsgruppen (57 - 59; 60 ...; 61 - 63) zugeordnet und mit Anschlüssen (64 - 70) versehen sind, die im oberen Bereich unterbrochen sind, wobei diese Anschlüsse (64 - 70) Unterbrechungsschalter aufweisen.

12. Vorrichtung nach Anspruch 10, dadurch gekennzeichnet, daß die Magnetwicklung (57 - 63) gruppenweise unterteilt und an Erregungsleiter (103, 71) angeschlossen ist, die als umlaufende bandförmige Stromzuführungsleiter (103, 71) ausgeführt sind, wobei bürstenartige Kontaktanordnungen (72 - 75) für Gruppen von Magnetwicklungen vorgesehen sind und die bürstenartigen Kontaktanordnungen (72 - 75) abschaltbar ausgeführt sind und über einen Bereich des Umlaufs, beginnend im oberen Umlenkpunkt, von den Stromzuführungen trennbar sind.

13. Vorrichtung nach einem der Ansprüche 9 - 12, dadurch gekennzeichnet, daß ein innerer Antriebsträger (20) und eine äußere Transportfläche (21) vorgesehen sind, zwischen welchen die Polstücke und Wicklungen (27 - 35) angeordnet sind.

14. Vorrichtung nach Anspruch 13, dadurch gekennzeichnet, daß ein Transportband die äußere Transportfläche (21) bildet und im geradlinigen Abschnitt des Transportbandes durchhängend geführt und im Bereich der Umlenkung um Umlenkwalzen (3, 4) straff geführt ist.

15. Vorrichtung nach einem der Ansprüche 4 - 14, dadurch gekennzeichnet, daß sich in Längsrichtung erstreckende Magnetpole (50 - 56, 91, 92) klotzartig unterteilt und innen eng benachbart auf dem inneren Antriebsträger (20) angeordnet sind und daß die Wicklungen insbesondere an Kopfstücken der gruppenweise unterteilten Magnetpole mit Spiel zu diesen angeordnet sind.

16. Vorrichtung nach einem der Ansprüche 1 - 15, dadurch gekennzeichnet, daß am eintauchenden Ende der Fördervorrichtung eine weitere Magnetanordnung vorgesehen ist, die entgegen der Transportrichtung der auftauchenden Fördervorrichtung in das Wasser tauchend angeordnet ist und deren Magnetfeld (108) vor der Fördervorrichtung als Sammler des Gemisches mit magnetisierbarem Material vorgesehen ist, wobei am eintauchenden Ende (104) der Fördervorrichtung eine zusätzliche Magnetanordnung (113) mit einer über die Fördervorrichtung hinausgehenden und im Wasser angeordneten schnabelartigen Polanordnung (115, 116) vorgesehen ist, wobei entweder ein Solenoid (105) mit insbesondere sich mit zunehmendem Abstand vor der Fördervorrichtung (8)

0125474

trichterförmig erweiternden Windungen (106), oder ein flachgedrückter Konus (109) aus magnetisierbarem Material vorgesehen sind, der eine zusätzliche Magnetwicklung (106) trägt und dessen weitere Mündung (110) von der Fördervorrichtung (8) abgekehrt ist.

17. Vorrichtung nach einem der Ansprüche 1 - 16 mit einer bandförmigen Fördervorrichtung, dadurch gekennzeichnet, daß als eine zusätzliche Magnetanordnung (117) eine Magnetwicklung um das Förderband (8) herumgelegt und so erregt ist, daß die erzeugten Feldlinien an der Oberseite des Förderbandes (8) parallel zur Transportrichtung desselben verlaufen.

0125474

Fig.1

Fig.2

0125474

Fig. 3

# Fig. 4

Fig. 5

# Fig. 6

0125474

Fig.7

Fig.9

Fig.8

13

57

50  51  52  53  54  55  56

4

3

8/9

0125474

Fig. 10

Fig. 10 a  Fig. 10 b

## Fig.11

118    117    107    108

105    Fig.11a

8    104    106

## Fig.11c

106    109

## Fig.11b

109

8    110

111    111    112

110

## Fig.12

115

114

113    116

8

Europäisches
Patentamt

**EUROPÄISCHER RECHERCHENBERICHT**

0125474

Nummer der Anmeldung

EP 84 10 3827

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| Y | FR-A-2 088 313 (COMMONWEALTH SCIENTIFIC AND INDUSTRIAL RESEARCH ORGANIZATION & IMPERIAL CHEMICAL INDUSTRIES OF AUSTRALIA AND NEW ZEALAND LTD.) <br> * Anspruch 9; Seite 5, Zeilen 16-19; Seite 12, Zeilen 16-17 * | 1 | B 03 C 1/00 <br> B 03 C 1/16 <br> B 03 C 1/14 <br> E 02 B 15/04 |
| | --- | | |
| Y | DE-B-1 039 453 (B. BABIN) <br><br> * Anspruch 1; Spalte 2, Zeilen 26-28; Spalte 3, Zeilen 4-18; Figuren 2,3 * | 1,3,7, 8 | |
| | --- | | |
| T | IEEE TRANSACTIONS ON MAGNETICS, Band MAG-10, Nr. 3, September 1974, Seiten 923-926, New York, USA; S. OKAMOTO: "Iron hydroxides as magnetic scavengers" <br> * Seite 923, linke Spalte, Absatz 2 * | 1 | RECHERCHIERTE SACHGEBIETE (Int. Cl. 3) <br><br> B 03 C <br> E 02 B |
| | --- | | |
| A | US-A-3 697 420 (D.S. BLAISDELL et al.) <br> * Ansprüche 5-8; Spalte 8, Zeile 30 - Spalte 9, Zeile 2; Spalte 9, Zeilen 49-63; Figuren 2,5 * | 1,16 | |
| | --- | | |
| A | DE-B-1 242 522 (T. WILCKE) <br> * Anspruch 1; Spalte 3, Zeilen 10-42; Figuren 1,3 * | 1,9,13 | |
| | ---     -/- | | |

Der vorliegende Recherchenbericht wurde für alle Patentansprüche erstellt.

| Recherchenort <br> DEN HAAG | Abschlußdatum der Recherche <br> 30-07-1984 | Prüfer <br> DECANNIERE L.J. |
|---|---|---|

EPA Form 1503. 03.82

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

 

& : Mitglied der gleichen Patentfamilie, übereinstimmendes Dokument

## EINSCHLÄGIGE DOKUMENTE

Seite 2

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| A | DE-B-1 023 731 (H. BEHRENS) <br> * Spalte 2, Zeile 46 - Spalte 3, Zeile 14; Figuren 1,2 * <br><br> --- | 4 | |
| A | FR-A-1 156 315 (J. JUNGERS) <br><br> * Zusammenfassung Punkte 1,7,9; Seite 4, linke Spalte, Absatz 8; rechte Spalte, Absatz 4 - Seite 5, linke Spalte, Absatz 2; Figuren 1,7,8 * <br><br> ----- | 9-12, 14,15 | |
| | | | RECHERCHIERTE SACHGEBIETE (Int. Cl. ³) |

Der vorliegende Recherchenbericht wurde für alle Patentansprüche erstellt.

| Recherchenort <br> DEN HAAG | Abschlußdatum der Recherche <br> 30-07-1984 | Prüfer <br> DECANNIERE L.J. |
|---|---|---|